# EUROPÄISCHE PATENTANMELDUNG

(11) **EP 1 085 775 A1**
(43) Veröffentlichungstag der Anmeldung: **21.03.2001**
(21) Anmeldenummer: 00119574.2
(22) Anmeldetag: 07.09.2000
(51) Int. Cl.: H04Q 7/38

(54) **Verfahren und System zur Bereitstellung detaillierter Teilnehmer-Ortsinformationen über Roaming-Nummer und Subscriberinformationen**

(30) Priorität: 14.09.1999 DE 19944007
(71) Anmelder: SIEMENS AKTIENGESELLSCHAFT, 80333 München (DE)
(72) Erfinder: Berg, Andreas, Dr., 10585 Berlin (DE); Moneke, Klaus, 14089 Berlin (DE)

(57) **Zusammenfassung**

Die Erfindung bezieht sich auf ein Verfahren zum Bereitstellen von Teilnehmer-Ortsinformationen in einem Kommunikationssystem mit zwei oder mehr aktiven Stationen und einem Kommunikationsnetz mit zumindest drei Hierarchieebenen (VLR, HLR bzw. BSC/MSC bzw. BS, Z) zur Verwaltung von Kommunikations- und/oder Informationsverbindungen zwischen den zumindest zwei Stationen (MS, MS-A, MS-B, A).

Insbesondere zur Vermeidung eines Sprachverbindungsaufbaus vor Kenntnis des genauen Aufenthaltsorts einer zu rufenden Mobilstation werden zuerst in einer mittleren Hierarchieebene (BSC/MSC) Ortsinformationen der zu rufenden Mobilstation (MS-B), die sich auf einer untergeordneten Hierarchieebene (BS, Z) befindet, ermittelt und über Informationsverbindungen an eine übergeordnete Hierarchieebene (VLR, HLR, SCP) übermittelt, die den allgemeinen Netzbetrieb überwacht und verwaltet.

## Beschreibung

Die Erfindung betrifft ein Verfahren zur Bereitstellung von Teilnehmer-Ortsinformationen gemäß den oberbegrifflichen Merkmalen des Patentanspruchs 1 und ein Kommunikationssystem zum Durchführen eines solchen Verfahrens.

Bei verbindungsorientierten Kommunikationsdiensten in einem Kommunikationsnetz sind die Verbindungen durch ein Intelligentes Netz (IN) steuerbar. So ist beispielsweise für Mobilfunknetze nach dem GSM-Standard (GSM: Global System for Mobile Communication) eine CAMEL-Plattform (CAMEL: Customized Applications for Mobile network Enhanced Logic) gemäß der GSM-Empfehlung 03.78 definiert, um eine weltweite Nutzung der Leistungsmerkmale des Intelligenten Netzes zu ermöglichen. Das Übertragen der elektromagnetischen Wellen erfolgt dabei zwischen Mobil- und Basisstationen mit Trägerfrequenzen, die in dem für das jeweilige System vorgesehenen Frequenzband liegen. Beim GSM liegen die Trägerfrequenzen im Bereich von 900, 1800 bzw. 1900 MHz. Für zukünftige Mobilfunknetze mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Die übliche Architektur des Intelligenten Netzes sieht eine Dienstevermittlungsfunktion (Service Switching Function) und eine Dienstesteuerungsfunktion (Service Control Function) vor, die über eine Signalisierungsstrecke miteinander verbunden sind. Als Applikation wird hierbei ein spezielles Protokoll verwendet, das für das Mobilfunknetz aus dem CAP-Protokoll (CAMEL Application Part) besteht.

In bestehende Mobilfunknetze nach dem GSM-Standard werden derzeit auch neuartige Datendienste wie der Paketdatendienst GPRS (General Packet Radio Service) gemäß der GSM-Empfehlung 03.60 eingeführt. Die Übertragung im Mobilfunknetz findet hierbei nicht verbindungsorientiert, sondern in Form von Paketdaten statt. Diese Art der Übertragung nutzt die gegebenen Übertragungsressourcen im Mobilfunknetz besser aus. Mit diesem GPRS-Netz ist es auch möglich, Kurzmitteilungen (SMS) zu übertragen. Die Architektur für den Paketdatendienst geht davon aus, daß das vom mobilen Teilnehmer benutzte Kommunikationsendgerät, wie ein Mobilstation an ihrem jeweiligen Aufenthaltsort von einem Dienstenetzknoten (Serving GPRS Support Node - GPRS: General Packet Radio System) bedient wird. Um Paketdaten zu empfangen oder zu senden, ist der Zugang zu einem Paketdatennetz notwendig. Zu diesem Zweck werden Zugangsnetzknoten (Gateway GPRS Support Nodes) bereitgestellt, die jeweils den Zugang zu dem Paketdatennetz - z.B. Internet - realisieren und ein bestimmtes Paketdatenprotokoll - z.B. Internet Protokoll - unterstützen. Zwischen dem Dienstenetzknoten und dem Zugangsnetzknoten ist im Mobilfunknetz ein Tunnel vorgesehen, über den die Pakete übertragen werden. Da sich die mobilen Teilnehmer mit ihren Kommunikationsendgeräten zwischen mehreren Funkversorgungsgebieten eines Mobilfunknetzes bewegen, gelangt der einzelne Teilnehmer möglicherweise in das Versorgungsgebiet eines neuen Dienstenetzknotens, so daß der Tunnel umzuschalten ist und die Pakete auf einem neuen Übertragungsweg durch das Mobilfunknetz zu übertragen sind. Der bisherige Dienstenetzknoten kann den Paketdatendienst für den betreffenden Teilnehmer in diesem Fall nicht mehr steuern.

Allgemein ist bei derartigen Systemen der Aufbau einer Verbindung zwischen einem ersten Teilnehmer, der sich innerhalb des Kommunikationsnetzes befinden kann oder von außerhalb in das Kommunikationsnetz eingewählt hat, und einem zweiten bzw. B-Teilnehmer, einer Mobilstation im Kommunikationsnetz, aufwendig, für die ein Ruf über z.B. direkte Anfragen (Interrogation) oder im Rahmen von CAMEL über ATI (ATI: Any Time Interrogation) eingeht. In einem ersten Schritt wird beim Verbindungsaufbau über eine Abfrage zum Beispiel bei dem Heimatregister festgestellt, in welchem Bereich sich der zu rufende Teilnehmer befindet. Danach findet im zweiten Schritt eine Durchschaltung einer Verbindung zu dem Basisstations-Schaltzentrum des Bereiches statt. In einem dritten Schritt wird dann in diesem Bereich nach der Basisstation gesucht, in deren Sendebereich sich der zu rufende Teilnehmer befindet. Abschließend wird die Verbindung, die bereits vom ersten Teilnehmer bis zum Basisstations-Schaltzentrum besteht, dann zu diesem zu rufenden Teilnehmer hin verlängert.

Mit anderen Worten steht einem im Netz koordinierenden Dienstesteuerpunkt (SCP) bei Rufen, die für eine Mobilstation eingehen, von einem Besucher- oder Heimatregisters lediglich eine Nummer zur Verfügung, die nur den weiten Einzugsbereich einer gesamten Mobilvermittlungsstelle (MSC) oder eines Basisstations-Schaltzentrums (BSC) angibt. Die genaue Basisstationsnummer und die Zellennummer darin sind in einer späteren Datenverarbeitung bzw. einem Postprocessing auszuwerten, nicht aber z.B. durch IN-Dienste während eines Telefonats und während eines MTC Verbindungsaufbaus. Nachteilhafterweise ist der Aufenthaltsort einer zu rufenden Station daher ohne großen Aufwand nur sehr ungenau feststellbar. Zudem erfolgt die Abfrage für jeden eingehenden Ruf erneut und individuell.

Nachteilhaft ist bei dieser Vermittlungsweise auch, daß bereits bei der u.U. sehr zeitintensiven Suche nach einem zu rufenden Teilnehmer eine feste Verbindung aufgebaut wird, wodurch Kapazitäten des Kommunikationsnetzes bereits gebunden werden, obwohl noch gar keine eigentliche Kommunikation erfolgt. Insbesondere in dem Fall, daß der zu rufende Teilnehmer zu dem Zeitpunkt eines Rufs nicht im Netz eingebucht oder durch eine andere bereits bestehende Kommunikationsverbindung belegt ist, also in dem Fall, daß eine Verbindung nicht zustande kommen kann, werden Netzressourcen verschwendet.

Insbesondere kann es auch für die an Bedeutung gewinnenden ortsabhängigen Dienste im intelligenten Netz wichtig sein, die genaue Kenntnis über den Aufenthaltsort einer kommunizierenden Station zu haben. Bisherige Vorschläge in Überwachungs- und Notfallgeräte z.B. eine GPS-Signalerkennung zu integrieren, sind technisch nur sehr aufwendig umsetzbar.

Der Erfindung liegt die Aufgabe zugrunde, ein verbessertes Verfahren zur Bereitstellung von Teilnehmer-Ortsinformationen bzw. ein Kommunikationssystem zum Durchführen eines solchen Verfahrens bereitzustellen.

Diese Aufgabe wird durch das Verfahren mit den Merkmalen des Anspruchs 1 und das Kommunikationssystem mit den Merkmalen des Anspruchs 15 gelöst. Vorteilhafte Weiterbildungen sind Gegenstand von Unteransprüchen.

Die Ermittlung einer (möglichst) genauen Information über den Aufenthaltsort einer zu rufenden Station ermöglicht eine deutliche Vereinfachung des Verbindungsaufbaus. Insbesondere ermöglicht das Verfahren den Aufbau der eigentlichen festen Sprach- oder Datenverbindung hinauszuzögern, bis konkret feststeht, wo sich der zu rufende Teilnehmer befindet. Dadurch werden Ressourcen des Netzes zwischen dem rufenden Teilnehmer und einer Schaltzentrale nahe dem zu rufenden Teilnehmer erst dann belegt, wenn feststeht, wo sich letzterer befindet. Indirekt führt dies auch zu einer Kostenentlastung des Netzbetreibers, die letztendlich das entsprechende Netz auch für den einzelnen Teilnehmer interessanter macht. Insbesondere können ortsabhängige IN-Dienste sehr gut auf den momentanen Aufenthaltsort der Station mit dem eingehenden Ruf reagieren, so daß auch neue Marktsegmente abdeckbar sind.

Da der Aufbau der Sprach- oder Datenverbindung in der Regel von einer Schalt- und Verwaltungsstelle auf einer übergeordneten Ebene aus erfolgt, werden die Ortsinformationen sinnvollerweise zu dieser übermittelt. Eine Übermittlung nur auf Abfrage vermeidet eine allzu große Belastung des Systems auf den unteren Hierarchieebenen, da Verbindungen derzeit zu einer Vielzahl von Mobilstationen der untersten Ebene nur selten aufzubauen sind. Im Gegenzug kann aber von den Verwaltungseinrichtungen in der mittleren Ebene eine automatische oder zyklische Abfrage der Ortsinformationen einzelner Mobilstationen durchaus vorteilhaft sein, wenn es sich beispielsweise um Mobilstationen handelt, die z.B. als häufig zu verbindende Stationen gekennzeichnet sind. Die Ortsinformationen werden dann sinnvollerweise zwischengespeichert.

Die Übertragung von Anforderungen und/oder Ortsinformationen ganz oder zumindest teilweise über Informationsverbindungen wie Signalisierungskanäle und/oder IP-Verbindungen zu leiten spart Ressourcen im Bereich der Sprach- und/oder Datenverbindungen. Dabei wird die Strecke auf der bereits eine Sprach- und/oder Datenverbindung aufgebaut wird so weit wie möglich beschränkt, im Idealfall gar nicht eingerichtet. Insbesondere auf der Strecke durch eine Luftschnittstelle sollte möglichst lange nur eine Informationsverbindung bestehen.

Die Ortsinformationen mittels Paging auf Anforderung und/oder automatisch zu ermitteln ermöglicht die weitestgehende Verwendung bestehender Einrichtungen und Verfahren.

Informationen über die Erreichbarkeit der zu rufenden Station selber oder z.B. deren Mailbox ermöglichen eine weitere Einsparung von Ressourcen, da diese nicht durch vergebliche Verbindungsversuche unnötig blockiert werden.

Besonders vorteilhaft ist auch die Übermittlung der Ortsinformationen und/oder einer Warnmeldung bei Überwachungssystemen. So kann z.B. im Idealfall von einer beliebigen Station aus der momentane Aufenthaltsort einer gebrechlichen Person oder eines Transportfahrzeugs überprüft werden. Lediglich eine Anzeige oder Sprachübermittlung der Ortskoordinaten wären zusätzlich einzurichten. Für solche Einrichtungen wäre u.U. die anschließende Einrichtung einer Sprachverbindung entbehrlich.

Nachfolgend wird ein Ausführungsbeispiel anhand der Zeichnung näher erläutert. Es zeigen:
- Fig. 1: ein Blockschaltbild eines bekannten Mobilfunksystems, und
- Fig. 2: einen Ablaufplan eines Verfahrens zum Einholen einer Ortsinformation.

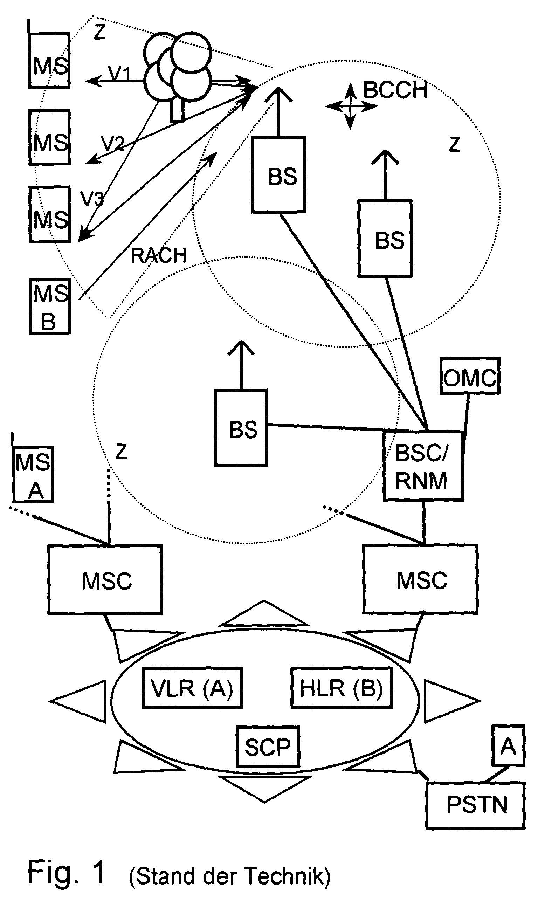

Das in Fig. 1 dargestellte Mobilfunksystem als Beispiel eines bekannten Funk-Kommunikationssystem besteht aus einer Vielzahl von Mobilvermittlungsstellen MSC, die über ein Netz untereinander vernetzt sind und selber oder über das Netz den Zugang zu einem Festnetz PSTN herstellen. Weiterhin sind diese Mobilvermittlungsstellen MSC mit jeweils zumindest einem Basisstations-Schaltzentrum BSC und/oder einer Einrichtung RNM zum Zuteilen von funktechnischen Ressourcen verbunden. Jede dieser Einrichtungen BSC/RNM ermöglicht wiederum eine Verbindung zu zumindest einer Basisstation BS. Eine solche Basisstation BS kann über eine Funkschnittstelle eine Verbindung zu Teilnehmerstationen, z.B. mobilen Stationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt.

In Fig. 1 sind beispielhaft bestehende Verbindungen V1, V2, V3 zur Übertragung von Nutzinformationen und Signalisierungsinformationen zwischen mobilen Stationen MS und einer Basisstation BS und eine Anforderung zur Ressourcenzuteilung oder eine kurze Bestätigungsmeldung in einem Zugriffskanal RACH durch eine weitere mobile Station MS-B dargestellt. Weiterhin ist ein Organisationskanal (BCCH: Broadcast Control CHannel) dargestellt, der zur Übertragung von Nutz- und Signalisierungsinformationen mit einer definierten Sendeleistung von jeder der Basisstationen (BS) für alle mobilen Stationen bereitgestellt wird.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, insbesondere für Teilnehmerzugangsnetze mit drahtlosem Teilnehmeranschluß.

Neben diesem Außenbereich vom Netz sind in diesem auch Besucherregister VLR (VLR: Visiting Location Register) und Heimatregister HLR (HLR: Home Location Register) bereitgestellt, die zur Verwaltung von einzelnen Teilnehmern dienen. Im Heimatregister HLR werden beispielsweise Informationen zu den einzelnen Teilnehmern bzw. Mobilstationen MS verwaltet, die für dieses spezielle Netz registriert sind. Zu diesen Informationen zählt auch der grobe Aufenthaltsbereich bzw. die daraus entnehmbare VLR-Nummer, die lediglich eine zuständige Mobilvermittlungsstelle MSC angibt. Das Besucherregister VLR verwaltet entsprechend Daten von Teilnehmern, die sich z.B. zeitweilig mittels einer sogenannten Roamingfunktion im Bereich der MSC/VLR einbuchen.

Ein Dienste- bzw. Service-Steuerpunkt SCP koordiniert die Funktionen vom Netz und den beschriebenen Verbindungsaufbau im Netz.

Bei dem hier erläuterten Ausführungsbeispiel, erfolgt der eigentliche Aufbau einer festen Verbindung, z.B. einer Sprachverbindung oder einer Datenverbindung, erst zu einem Zeitpunkt, zu dem Informationen über einen genaueren oder einen exakten Aufenthaltsort des gerufenen Teilnehmers MS-B vorliegen.

Dazu werden die MAP-Operationen (MAP: Mobile Application Part) "Roaming-Nummer bereitstellen" (PRN: Provide Roaming Number) und "Teilnehmerinformation bereitstellen" (PSI: Provide Subscriber Information) erweitert, wie folgt.
- In der Richtung vom Servicesteuerpunkt SCP zu Heimatregister HLR bzw. Besucherregister VLR wird ein Flag eingeführt, das der Mobilvermittlungsstelle MSC anzeigt, ob ein Paging bzw. Ruf oder Funkruf durchgeführt werden soll oder nicht. Paging bezeichnet das Suchen der Mobilstation im Bereich des Ortsbereichs (der Location Area), in dem der B-Teilnehmer zuletzt Kontakt zum Netz hatte (MOC, MTC, Location Update); d.h. alle Basisstationen dieses Ortsbereichs senden die Kennung der Mobilstation.
- In der umgekehrten Richtung vom Heimatregister HLR bzw. Besucherregister VLR zum Servicesteuerpunkt SCP muß optional der Ortsbereich (location area) und/oder die Zellen-Identifikationsnummer (Cell ID) des Aufenthaltsortes einer darin befindlichen Mobilstation MS-B übermittelt werden.

Damit kann die Mobilvermittlungsstelle MSC optional mittels Paging den Ortsbereich und/oder die Zellen-Identifikationsnummer ermitteln und auf Anfrage weiterleiten.

Auf eine Anfrage hin werden von der Mobilvermittlungsstelle MSC lediglich diese Informationen an die anfragenden Stelle weitergeleitet, in der Regel also an das Besucherregister VLR und/oder den Servicesteuerpunkt SCP.

Optional kann das Paging von der Mobilvermittlungsstelle MSC wahlweise automatisch in bestimmten Zeitabständen erfolgen, wobei die ermittelten Daten dann zwischengespeichert werden, um so jederzeit bereitzustehen, oder auf eine entsprechende Anfrage von einer anderen Stelle erfolgen, also insbesondere vom Besucherregister VLR oder dem Servicesteuerpunkt SCP aus.

Entsprechend muß die gesuchte bzw. angesprochene Mobilstation MS-B auf eine Anforderung, in der Regel eine im GSM definierte RIL3-RR Paging Request bzw. "Radio Interface Layer 3 - Radio Resource Management"-Anforderung, von deren zuständigen Mobilvermittlungsstelle MSC nicht unbedingt mit einer ansonsten üblichen Kanalanforderung (Channel Request) antworten, weil bis zu diesem Zeitpunkt noch kein Kanal bis zu ihr durchgeschaltet ist. Für die Mobilvermittlungsstelle MSC reicht eine einfache ihr zuordbare Reaktion der Mobilstation MS-B aus, um deren Standort festzustellen und daraufhin die entsprechenden Informationen über PRN oder PSI an das Heimatregister HLR, das Besucherregister VLR und/oder den Servicesteuerpunkt SCP zurücksignalisieren zu können.

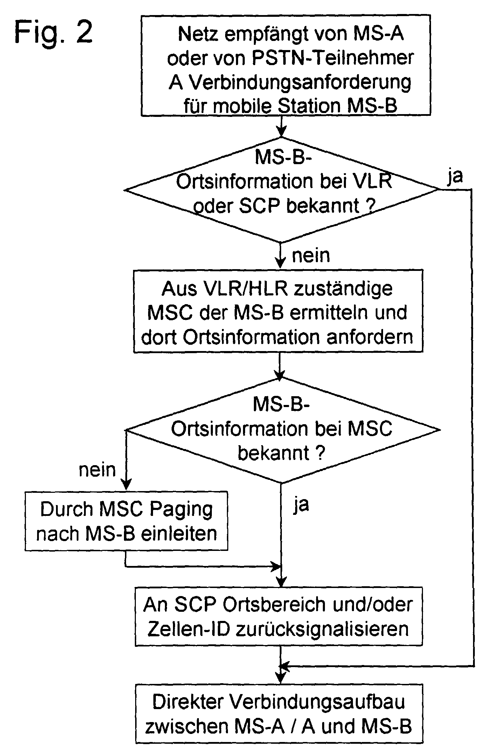

Ein beispielhafter Ablauf eines Verbindungsaufbaus wird anhand der Fig. 2 erläutert.

Nach dem Eingang einer Verbindungsanforderung eines Teilnehmers, z.B. eines externen Teilnehmers über das Festnetz PSTN oder eines netzinternen Teilnehmers MS-A, kommunizieren einerseits Besucherregister VLR, Heimatregister HLR mit Grundinformationen über den gerufenen Teilnehmer MS-B und andererseits der Servicesteuerpunkt SCP miteinander.

Falls bei einer dieser Stationen VLR, HLR, SCP die momentane Ortsinformation der zu rufenden Mobilstation MS-B bekannt ist, wird direkt ein gezielter Verbindungsaufbau eingeleitet. Andernfalls wird eine untergeordnete Station, die auf unterster Hierarchieebene als zuständig erkannt wird, hier die Mobilvermittlungsstelle MSC, ermittelt und aufgefordert, Ortsinformationen der Mobilstation MS-B zu übermitteln.

Die Ortsinformation kann dabei vorgegeben sein als Zellen-Identifikationsnummer oder auch nur Basisstationsnummer, muß also abhängig von der gewünschten Genauigkeit nicht zwingend die absolut genaueste Information sein.

Falls bei der Mobilvermittlungsstelle MSC keine aktuellen Ortsinformationen der Mobilstation MS-B vorliegen, führt diese ein Paging bzw. einen Ruf nach der Mobilstation MS-B durch. Aufgrund irgendeiner geeigneten Antwort der Mobilstation MS-B wird deren Position durch die Mobilvermittlungsstelle MSC ermittelt. Die Mobilvermittlungsstelle MSC gibt abschließend eine Information an die nach der Ortsinformation fragende Stelle zurück. In der Regel wird die angeforderte Ortsinformation zurückgegeben. Falls die Mobilstation MS-B nicht ermittelbar oder belegt sein sollte, so kann auch eine entsprechende Fehlerinformation oder eine Zusatzinformation zur Ortsinformation mit zurückgesendet werden.

Mit diesen Informationen leiten die Stationen VLR, HLR und/oder SCP einen gezielten Verbindungsaufbau ein.

Die vorstehend genannten Informationsflüsse können über kurzzeitige Verbindungen erfolgen, so daß die Netzressourcen nur möglichst kurz beansprucht werden. Vorzugsweise findet der Informationsaustausch jedoch über Informationskanäle statt, beispielsweise Signalisierungskanäle oder IP-Verbindungen, so daß die Verwendung von echten Sprach- und/oder Datenverbindungen im Idealfall ganz vermeidbar ist.

Zur Übermittlung der Ortsinformationen ist auch der Einsatz vom bekannten IDP (Initial Detection Point / anfänglichen Erfassungspunkt) oder einer "Abfrage zu beliebigem Zeitpunkt" (ATI: AnyTime Interrogation) möglich. Insbesondere sollte der Aufbau einer echten Sprach- und/oder Datenverbindungen auf Luftschnittstellen so lange wie möglich vermieden werden.

Die zu rufende Station MS-B muß übrigens nicht zwingend eine Mobilstation sein, die gerufen wird, sondern es kann auch eine andere Station in einem Kommunikationsnetz sein, das Ortsinformationen nicht ständig bereit hält.

Im Fall der Einbindung von paketvermittelnden Verbindungen kann das gleiche Grundprinzip angewendet werden, wie bei rein verbindungsorientierten Sprachverbindungen. Bei der Einbindung eines Internets und/oder Intranets können Zugangsknoten, Schnittstellen zu Tunneln oder Dienstenetzknoten z.B. die Stellen sein, die in einer "mittleren Hierarchieebene" aufgefordert werden, Ortsinformationen zu ermittlen und zu übertragen.

## Patentansprüche

1. Verfahren zum Bereitstellen von Teilnehmer-Ortsinformationen in einem Kommunikationssystem, insbesondere Funk-Kommunikationssystem, mit einer, zwei oder mehr aktiven Stationen (MS, MS-A, MS-B, A) und einem Kommunikationsnetz mit zumindest drei Bereichen (VLR, HLR bzw. BSC/MSC bzw. BS, Z) zur Verwaltung von Kommunikations- und/oder Informationsverbindungen zwischen Stationen (MS, MS-A, MS-B, A), wobei zumindest eine erste Station (MS-B), deren Ortsinformationen bereitzustellen sind, sich in einem ersten Bereich (BS, Z) befindet,
dadurch gekennzeichnet,
daß die Ortsinformationen von einem zweiten Bereich (BSC/MSC) aus ermittelt und/oder an einen dritten Bereich (VLR, HLR, SCP) übermittelt werden.

2. Verfahren nach Anspruch 1, bei dem
von zumindest einer zweiten Station (MS-A; A) ausgehende Anforderungen hinsichtlich der Ortsinformation der zumindest einen ersten Station (MS-B) und/oder einer Verbindung mit dieser im dritten Bereich (VLR, HLR, SCP) eingehen.

3. Verfahren nach Anspruch 1 oder 2, bei dem
im dritten Bereich (VLR, HLR, SCP) eingehende Anforderungen dort verarbeitet werden und eine Information über eine zuständige Verwaltungs- und/oder Vermittlungsstelle (BSC/MSC) für die zumindest eine erste Station (MS-B) bestimmt wird, wobei sich die Verwaltungs- und/oder Vermittlungsstelle (BSC/MSC) im zweiten Bereich befindet.

4. Verfahren nach einem der vorstehenden Ansprüche, bei dem
die Übermittlung der Ortsinformationen aus dem zweiten Bereich (BSC/MSC) an den dritten Bereich (VLR, HLR, SCP) auf Anforderung des dritten Bereichs (VLR, HLR, SCP) erfolgt.

5. Verfahren nach einem der vorstehenden Ansprüche, bei dem
die Übertragung von Anforderungen und/oder Ortsinformationen ganz oder zumindest teilweise über Informationsverbindungen erfolgt, insbesondere über Signalisierungskanäle und/oder IP-Verbindungen.

6. Verfahren nach einem der vorstehenden Ansprüche, bei dem
ein Aufbau einer Sprach- und/oder Datenverbindung auf zumindest einem Teil der Strecke zwischen der zumindest einen ersten und der zumindest einen zweiten Station (MS-A, A bzw. MS-B) erst nach der Übermittlung der Ortsinformationen erfolgt.

7. Verfahren nach Anspruch 6, bei dem
der zumindest eine Teil der Strecke im ersten Bereich (BSC/MSC und BS, Z) liegt.

8. Verfahren nach Anspruch 6 oder 7, bei dem
zumindest ein Teil der Strecke durch eine Luftschnittstelle ausgebildet wird.

9. Verfahren nach einem der vorstehenden Ansprüche, bei dem
die Ortsinformationen mittels Paging auf Anforderung und/oder automatisch ermittelt werden.

10. Verfahren nach einem der vorstehenden Ansprüche, bei dem
die ermittelten Ortsinformationen im zweiten Bereich (BSC/MSC) zwischengespeichert werden.

11. Verfahren nach einem der vorstehenden Ansprüche, bei dem
eine Übermittlung der Ortsinformationen und/oder einer Warnmeldung erfolgt.

12. Verfahren nach Anspruch 11, bei dem
die Übermittlung der Ortsinformationen automatisch und/oder ohne den nachfolgenden Aufbau einer Sprach- und/oder Datenverbindung erfolgt.

13. Verfahren nach einem der vorstehenden Ansprüche, bei dem
ein Aufbau einer Sprach- und/oder Datenverbindung erst erfolgt, nachdem zusätzlich zu einer Ortssignalisierung auch eine Information über die Erreichbarkeit der ersten Station (MS-B) übermittelt wird.

14. Verfahren nach einem der vorstehenden Ansprüche, bei dem
der erste Bereich (MS, BS, Z) eine untergeordnete Hierarchieebene und/oder der zweite Bereich (BSC/MSC) eine mittlere Hierarchieebene und/oder der dritte Bereich (VLR, HLR, SCP) eine übergeordnete Hierarchieebene ist.

15. Kommunikationssystem, insbesondere Funk-Kommunikationssystem, zum Bereitstellen von Teilnehmer-Ortsinformationen, insbesondere zum Durchführen eines Verfahrens nach einem der vorstehenden Ansprüche, mit
- einem Kommunikationsnetz mit zumindest drei Bereichen, insbesondere drei Hierarchieebenen (VLR, HLR bzw. BSC/MSC bzw. BS, Z), zur Verwaltung von Kommunikations- und/oder Informationsverbindungen zwischen Stationen (MS, MS-A, MS-B, A) von zwei oder mehr aktiven Teilnehmern,
- zumindest einer ersten Station (MS-B), deren Ortsinformation bereitzustellen ist, im zumindest einen ersten Bereich (BS, Z), insbesondere in zumindest der einen unter einer mittleren angeordneten Hierarchieebene,
- zumindest einer Einrichtung (VLR, HLR, SCP) in einem dritten Bereich, insbesondere in einer übergeordneten Hierarchieebene, zum Verwalten von einer Anforderung zumindest einer zweiten Station (MS-A; A), die mit der ersten Station (MS-B) kommunizieren will,
- zumindest einer Verwaltungs- und/oder Vermittlungseinrichtung (BSC/MSC) im zumindest einen zweiten Bereich, insbesondere der mittleren Hierarchieebene, zum Verwalten von Stationen (MS, MS-B) in dem zumindest einen ersten Bereich (BS, Z),
gekennzeichnet durch
- zumindest eine Ermittlungseinrichtung (BSC/MSC) im zweiten Bereich (BSC/MSC) zum Ermitteln der Ortsinformation und/oder Übermitteln der Ortsinformation an den dritten Bereich (VLR, HLR, SCP).

16. Kommunikationssystem nach Anspruch 15, bei dem
zumindest die Ermittlungseinrichtung (BSC/MSC) im zweiten Bereich zum Ermitteln und/oder Übermitteln der Ortsinformation an den dritten Bereich (VLR, HLR, SCP) Teil einer Basisstations- und/oder Mobilvermittlungsstelle (BSC/MSC) ist.

17. Kommunikationssystem nach Anspruch 15 oder 16, bei dem
die zumindest eine Einrichtung im dritten Bereich eine Servicesteuereinrichtung (SCP), ein Heimatregister (HLR), ein Besucherregister (VLR) und/oder ein Zugangsnetzknoten ist.
